Europäisches Patentamt

European Patent Office

Office européen des brevets

(19)

(11)  **EP 1 685 934 A1**

(12)  **DEMANDE DE BREVET EUROPEEN**

(43) Date de publication:
**02.08.2006  Bulletin 2006/31**

(51) Int Cl.:
*B28D 5/04* (2006.01)    *B23D 57/00* (2006.01)

(21) Numéro de dépôt: **06000351.4**

(22) Date de dépôt: **10.01.2006**

(84) Etats contractants désignés:
**AT BE BG CH CY CZ DE DK EE ES FI FR GB GR
HU IE IS IT LI LT LU LV MC NL PL PT RO SE SI
SK TR**
Etats d'extension désignés:
**AL BA HR MK YU**

(30) Priorité: **28.01.2005  CH 1392005**

(71) Demandeur: **HCT Shaping Systems SA
1033 Cheseaux (CH)**

(72) Inventeurs:
• **Nasch Philippe
  1052 Mont-sur-Lausanne (CH)**
• **Foretay Alain
  1041 Poliez-Pittet (CH)**

(74) Mandataire: **Micheli & Cie SA
122, rue de Genève,
CP 61
1226 Thonex-Genève (CH)**

(54)    **Dispositif et procédé de sciage par fil**

(57)     Le dispositif de sciage par fil comprend au moins une zone de sciage (21) dans laquelle un fil (1) est enroulé sur au moins deux guide-fils (7, 37) en boucles successives d'une première boucle (b1) jusqu'à une dernière boucle (bn) de manière à former au moins une nappe (8) de brins de fils contre laquelle une pièce à scier (10) est sollicitée pour être sciée.

Des moyens de compensation (30) sont prévus pour remédier à une chute de la tension ($\Delta T$) apparaissant lors du sciage entre la première (b1) et la dernière boucle (bn), ces moyens de compensation (30) étant agencés de façon à augmenter progressivement la longueur de chaque boucle en partant de la première jusqu'à la dernière boucle. Cette augmentation de la longueur est de préférence réalisée grâce à des guide-fils de forme conique (37).

On obtient ainsi une grande qualité des tranches sciées et une vitesse de sciage optimale.

Fig.4

EP 1 685 934 A1

**Description**

La présente invention concerne un dispositif de sciage par fil comprenant au moins une zone de sciage dans laquelle un fil est enroulé sur au moins deux guide-fils en boucles successives d'une première boucle jusqu'à une dernière boucle de manière à former au moins une nappe de brins de fils contre laquelle une pièce à scier est sollicitée pour être sciée, le fil étant susceptible d'être déplacé selon un mouvement alternatif et/ou continu entre une zone d'entrée du fil et une zone de sortie entre lesquelles le fil est tendu avec une tension prédéterminée.

Les dispositifs du type précité sont bien connus. On a constaté dans les dispositifs connus qu'il existe lors du sciage une chute importante, de l'ordre de 20%, de la tension longitudinale exercée sur le fil en partant de la première jusqu'à la dernière boucle de la zone de sciage. Cette chute de tension engendre toute une série d'inconvénients, tels qu'une diminution de la qualité de sciage, l'apparition de traits de sciage, d'ondulations, de variations dans l'épaisseur des tranches sciées, de rugosités et d'autres irrégularités, ainsi qu'une diminution de la vitesse de sciage.

La présente invention a pour but de remédier à ces inconvénients, et elle est caractérisée à cet effet par les caractéristiques figurant dans la revendication indépendante 1, à savoir que le dispositif de sciage comprend des moyens de compensation pour remédier à une chute de la tension apparaissant lors du sciage entre la première et la dernière boucle, ces moyens de compensation étant agencés de façon à augmenter progressivement la longueur de chaque boucle en partant de la première jusqu'à la dernière boucle.

On obtient ainsi une qualité de sciage nettement meilleure, sans irrégularités de sciage.

Selon un mode d'exécution favorable, les moyens de compensation sont constitués par une augmentation progressive du rayon des guide-fils en partant de la première boucle jusqu'a la dernières boucle de façon à obtenir des guides-fils coniques.

Ces caractéristiques permettent d'obtenir une très grande qualité des tranches sciées et une construction simple et fiable.

La présente invention concerne également un procédé de sciage par fil selon lequel on scie une pièce à scier sollicitée dans une zone de sciage contre une nappe de brins de fils obtenue en enroulant un fil sur au moins deux guide-fils en boucles successives d'une première boucle jusqu'à une dernière boucle, le fil étant susceptible d'être déplacé selon un mouvement alternatif et/ou continu entre une zone d'entrée du fil et une zone de sortie entre lesquelles le fil est tendu avec une tension prédéterminée, caractérisé par le fait que l'on compense grâce à des moyens de compensation une chute de tension apparaissant lors du sciage entre la première et la dernière boucle en augmentant progressivement la longueur de chaque boucle en partant de la première jusqu'à la dernière boucle.

Toute chute de tension étant ainsi éliminée, on obtient une très grande régularité et qualité de sciage, alliée à une vitesse de sciage optimale.

D'autres avantages ressortent des caractéristiques exprimées dans les revendications dépendantes et de la description exposant ci-après l'invention plus en détail à l'aide de dessins qui représentent schématiquement et à titre d'exemple trois modes d'exécution et des variantes.

La figure 1 représente schématiquement un dispositif de sciage conventionnel.

La figure 2 illustre un diagramme de la tension T et de sa chute $\Delta T$ à travers les N boucles de la nappe de fils de la figure 1.

Les figures 3, respectivement 4, sont des vues de face, respectivement en perspective partielle illustrant un premier mode d'exécution du dispositif de sciage destiné à remédier à la chute de tension $\Delta T$.

Les figures 5, respectivement 6, représentent des vues en perspective, respectivement latérale d'un second mode d'exécution.

La figure 7 illustre un troisième mode d'exécution en perspective.

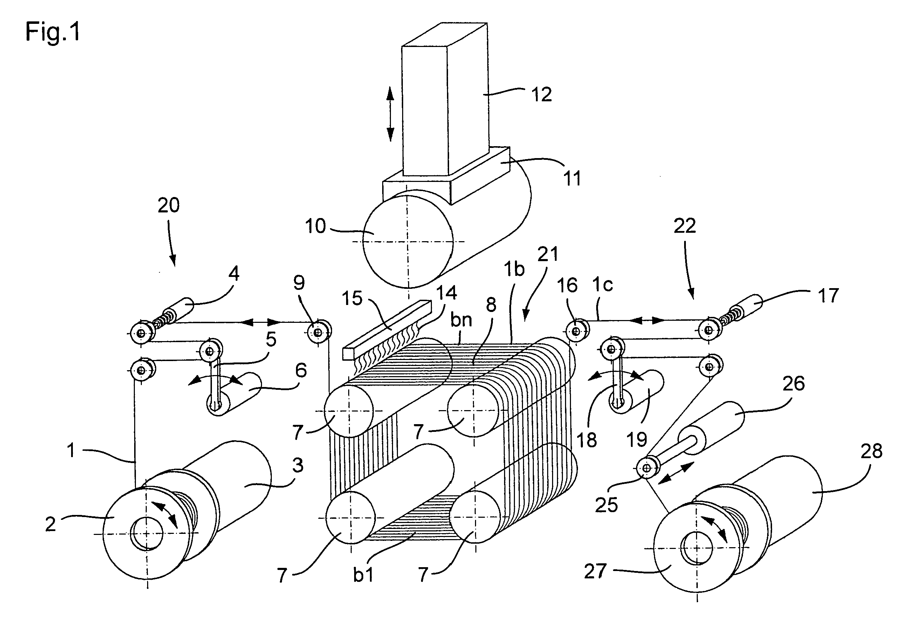

Dans le dispositif de sciage illustré à la figure 1, le fil neuf 1 sort dans une zone d'entrée 20 d'une bobine débitrice 2 qui est entraînée par un moteur 3. Un dispositif de mesure de tension 4 contrôle la position d'un bras de tension 5 accouplé à un moteur 6. Le fil passe alors sur un galet de renvoi 9 pour quitter cette zone d'entrée 20 et pour entrer dans une zone de sciage 21.

Cette dernière comprend au moins deux cylindres guide-fils 7 qui sont ici au nombre de quatre, autour desquels le fil 1 est enroulé en N boucles successives d'une première boucle b1 à une dernière boucle bn pour former au moins une nappe de fils 8 constitué de n brins de fils 1 b.

Une pièce à scier 10 est fixée sur une table support 11 et déplacée par un moteur 12 contre la nappe de fils 8 pour être sciée grâce à un abrasif 14 provenant d'un distributeur 15.

Ensuite, le fil usé 1 c sort de la zone de sciage 21 pour entrer par un galet de renvoi 16 dans une zone de sortie 22, dans laquelle il est acheminé à travers un second dispositif de mesure de tension 17, un bras de tension 18 accouplé à un moteur 19 qui est contrôlé par le second dispositif de mesure de tension 17 et une poulie de trancannage 25 actionnée en va-et-vient latéral par un moteur 26 pour être enroulé sur une poulie réceptrice 27 entraînée par un moteur 28.

Le fil 1 est ainsi susceptible d'être déplacé à travers la zone de sciage 21 selon un mouvement alternatif et/ou continu entre les zones d'entrées 20 et de sortie 22 entre lesquelles il est tendu avec une certaine tension.

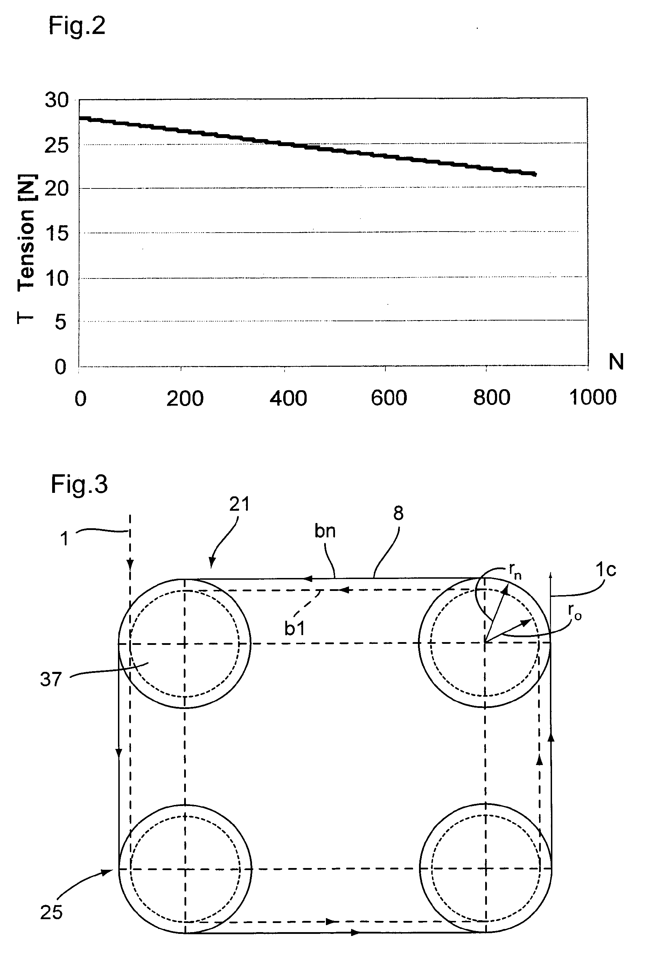

Des mesures de tension ont permis de constater qu'il existe lors du sciage d'une pièce 10 sollicitée contre la nappe de fils 8 une chute de tension $\Delta T$ entre la tension To à l'entrée de la première boucle b1 et la tension Tn à la sortie de la dernière boucle. Cette chute de tension $\Delta T = To - Tn$ se répartit en N chutes de tension partielles $\Delta T/N$ apparaissant dans chacune des N boucles dans les dispositifs de sciage conventionnels sans moyens de compensation destinés à remédier à cette chute de tension. La figure 2 illustre une telle chute de tension de 6 Newton, la tension T étant de 28 Newton à l'entrée et de 22 Newton à la sortie des N = 900 boucles de la zone de sciage.

Cette chute de tension $\Delta T$ engendre une diminution de la qualité de sciage, des traits de sciage, des ondulations, des variations dans l'épaisseur des tranches sciées et d'autres irrégularités et rugosités, ainsi qu'une diminution de la vitesse de sciage.

Pour palier à ces inconvénients majeurs, le dispositif de sciage selon l'invention est muni de moyens de compensation 30 permettant de remédier à cette chute de tension apparaissant progressivement entre la première et la dernière boucle. Ces moyens de compensation sont en particulier agencés de façon à augmenter progressivement la longueur des différentes boucles en partant de la première b1 jusqu'à la dernière nième boucle bn qui présente l'allongement $\Delta l$ le plus important de manière à compenser pour chaque boucle la chute de tension de façon adéquate.

En effet, on déduit les relations suivantes à partir de la loi de Hook :

$$1) \quad \varepsilon = \frac{\Delta l_n}{l_o} = \frac{\sigma_x}{E} = \frac{\Delta T_n}{E\pi\left(D_n/2\right)^2} = \frac{4\left(T_o - T_n\right)}{E\pi D_n{}^2}$$

où

$\varepsilon$ est la déformation,

$\Delta l_n$ est la différence de longueur totale,

$l_o$ est la longueur initiale du fil,

$\sigma_x$ est la contrainte [N/m$^2$],

E est le module d'élasticité de Young [N/m$^2$],

To est la tension à l'entrée de la première boucle [N],

Tn est la tension à la sortie de la dernière boucle [N],

$$\Delta T = T_o - T_{n,}$$

Do est le diamètre du fil à l'entrée de la première boucle,

Dn est le diamètre du fil à la sortie de la dernière boucle.

En admettant une longueur constante de chaque boucle, on obtient la relation suivante :

$$2) \quad \frac{T_n}{D_n{}^2} = \text{constant} = \frac{T_o}{D_o{}^2}$$

Des équations 1) et 2), il suit qu'il faut un allongement total $\Delta l_n$ calculé suivant l'équation 3) pour compenser entièrement la chute de tension $\Delta T = To - Tn$ entre l'entrée de la première boucle et la sortie de la dernière nième boucle:

$$3) \quad \Delta l_n = \frac{4T_o l_o}{E\pi}\left(\frac{1}{D_n{}^2} - \frac{1}{D_o{}^2}\right)$$

Les moyens de compensation sont donc agencés de façon à compenser la chute de tension par un allongement progressif $\Delta l_n/N$ pour chaque boucle successive entre la première b1 et la dernière boucle bn de la nappe de fils calculé selon l'équation :

$$4) \quad \frac{\Delta l_n}{N} = \frac{4 T_o l_o}{N \cdot E \cdot \pi} \left( \frac{1}{D_n{}^2} - \frac{1}{D_o{}^2} \right)$$

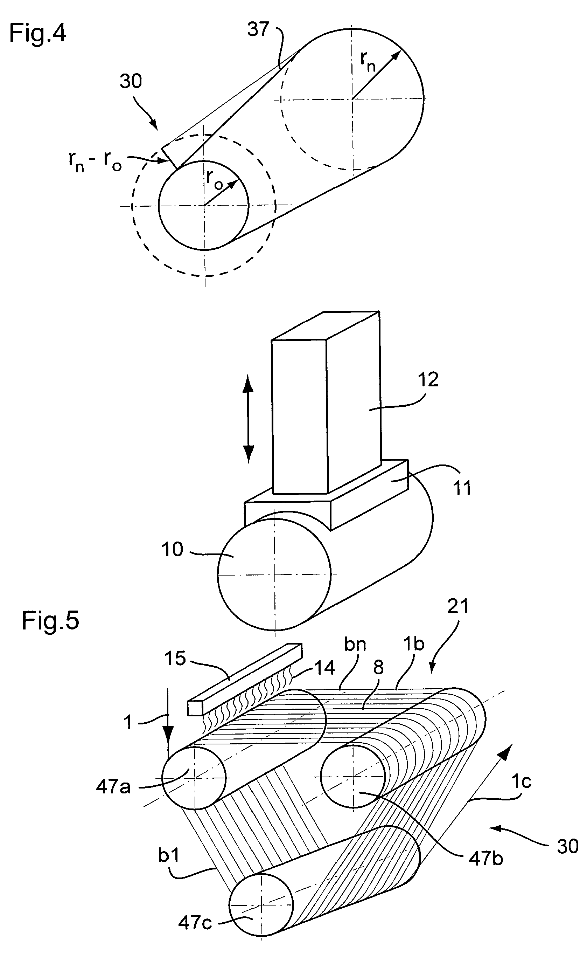

En référence aux figures 3 et 4 illustrant un mode d'exécution préféré, les moyens de compensation 30 sont constitués par une augmentation progressive du rayon des guide-fils 37 qui ne sont donc plus strictement des cylindres mais qui présentent une légère conicité en partant de la première boucle b1 jusqu'à la dernière boucle bn.

Ainsi on obtient les équations suivantes :

$$5) \quad \Delta l_n = 2 \, \pi \, (r_n - r_o) = 2 \, \pi \, \Delta r_n$$

et

$$6) \quad \Delta r_n = \frac{2 T_o l_o}{E \pi^2} \left( \frac{1}{D_n{}^2} - \frac{1}{D_o{}^2} \right)$$

où

$r_o$ est le rayon des guide-fils pour la première boucle,

$r_n$ est le rayon des guide-fils pour la n-ième et dernière boucle,

$\Delta r_n = r_n - r_o$ correspond à la différence des rayons de la première et dernière boucle, donc à la conicité des guide-fils 37.

Pour un exemple typique, on aura :

$l_o$ = 3,26 m
$T_o$ = 28 N
$D_o$ = 160 microns
$D_n$ = 150 microns
E = 210 GPa
$\Delta r_n \approx$ 0,5 mm

Le diamètre des guide-fils présentera donc une augmentation d'environ 1 mm entre la première et la dernière boucle. La conicité telle que représentée aux figures 3 et 4 est donc fortement exagérée.

Les moyens de compensation tiennent ainsi compte du fait que la diminution de la tension du fil entre la première et la dernière boucle résulte principalement de l'usure du fil donc de la diminution de son diamètre $\Delta D_n = D_o - D_n$.

D'autres facteurs pourront également jouer un rôle secondaire, tels que le fait que le fil usé s'enfonce plus profondément dans la gorge du guide-fils à cause de l'usure sur son diamètre, que le fil s'allonge sous l'effet de la dilatation thermique, que la longueur de la nappe est réduite à cause d'un flambage éventuel des guide-fils.

Ces facteurs dont l'importance est mineure pourront éventuellement être corrigés de façon empirique en s'appuyant sur des mesures obtenues grâce à des tests de sciage.

La conicité des guide-fils 37 pourra être obtenue par différents moyens, parmi lesquelles nous citons la taille de moins en moins ou de plus en plus profonde des gorges dans lesquelles le fil est disposé, l'épaisseur croissante du revêtement en polymère dans lequel les gorges sont taillées avec une profondeur constante, le diamètre croissant du cylindre métallique supportant le revêtement en polymère muni des gorges d'une profondeur constante.

Dans le mode d'exécution illustré aux figures 3 et 4 comportant quatre guide-fils 37, les quatre guide-fils 37 présentent une conicité identique. Il serait également possible de prévoir uniquement un nombre réduit de guide-fils 37 à conicité de compensation, par exemple deux, le restant des cylindres guide-fils étant cylindrique.

Le nombre total de guide-fils pourra être différent de quatre, par exemple 2, 3 ou davantage. Parmi ces guide-fils, certains ou tous pourront présenter une conicité de compensation.

Au lieu de présenter une conicité, l'un ou plusieurs ou tous les guide-fils cylindriques pourront présenter des axes non parallèles divergents agencés de façon à obtenir une augmentation de la longueur des boucles en partant de la première boucle b1 jusqu'à la dernière boucle bn.

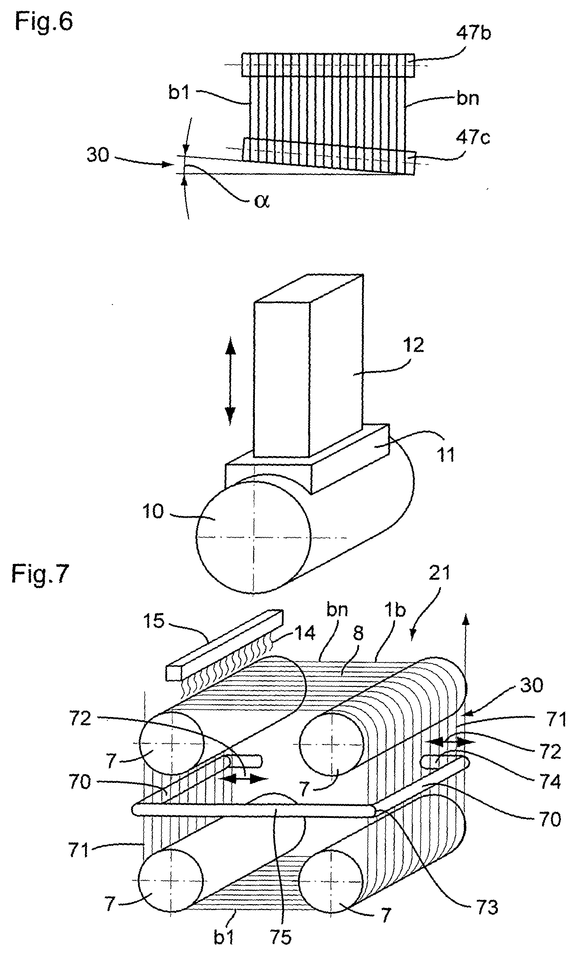

Ainsi, le second mode d'exploitation illustré aux figures 5 et 6 possède trois guide-fils cylindriques 47a, 47b, 47c. Les guide-fils 47a et 47b présentent des axes parallèles et forment une nappe de fils 8 contre laquelle la pièce à scier 10 est sollicitée. Le troisième guide-fils 47c possède un axe de rotation oblique incliné par rapport aux axes des deux autres guide-fils de façon que la dernière, n-ième boucle bn possède une longueur ln plus grande que la première boucle b1 permettant de compenser la chute de tension ΔTn. L'angle d'inclinaison α de l'axe du guide-fils 47c est bien entendu fortement exagéré aux figures 5 et 6.

Il est bien entendu que ce second mode d'exécution pourra présenter un autre nombre de guide-fils cylindriques dont les axes sont en partie ou en totalité non parallèles.

Le dispositif de sciage pourra encore être doté d'autres moyens de compensation 30 pour augmenter progressivement la longueur de chaque boucle b1 à bn, par exemple sous forme d'organe d'actionnement, de rouleaux, cylindres, tiges ou de peignes déplaçant les fils des boucles de fils différentiellement de façon à obtenir un allongement progressif des boucles b1 à bn.

Un troisième mode d'exécution présentant ce principe est illustré à la figure 7. Le dispositif de sciage est similaire à celui représenté à la figure 1. Il est cependant muni de moyens de compensation 30 qui se présentent sous forme de deux rouleaux 70 destinés à coopérer avec les parties latérales 71 des boucles b1 à bn du fil de telle manière que la boucle bn est pressée suivant la direction 72 par les rouleaux 70 de façon à obtenir une longueur $l_n$ plus grande par rapport à la boucle b1 qui présente une longueur lo. Ainsi la chute de tension ΔT de chaque boucle jusqu'à la dernière boucle bn peut être compensée de façon que chaque boucle de la zone de sciage 21 possède une même tension.

L'extrémité 73 des rouleaux 70 reste stationnaire grâce à une entretoise 75, tandis que l'extrémité 74 est déplacée suivant la direction 72 pour compenser exactement la chute de tension $\Delta T = To - T_n$ correspondant à un allongement Δln calculé selon l'équation 3) ou déterminé empiriquement par une série d'essais.

On pourra également avoir un nombre différent de rouleaux 70, par exemple qu'un seul rouleau. Les rouleaux pourront être disposés à d'autres emplacements par exemple latéralement à côté de la pièce à scier.

Il est bien entendu que les modes de réalisation décrits ci-dessus ne présentent aucun caractère limitatif et qu'ils peuvent recevoir toutes modifications désirables à l'intérieur du cadre tel que défini par la revendication 1. En particulier, le dispositif de sciage pourrait présenter une autre géométrie générale, un nombre supérieur de tables support 11 et de pièces à scier 10 par table support 11. Au lieu d'avoir une nappe ou deux nappes de fils 8 simples, on pourra prévoir des nappes croisées avec des brins de fils formant un angle prédéterminé entre eux. La gestion du fil dans les zones d'entrée et de sortie pourrait être agencée de façon différente. La détermination de l'allongement des boucles successives pourra être réalisée de façon empirique au lieu d'être calculée.

**Revendications**

1. Dispositif de sciage par fil comprenant au moins une zone de sciage (21) dans laquelle un fil (1) est enroulé sur au moins deux guide-fils (7, 37) en boucles successives d'une première boucle (b1) jusqu'à une dernière boucle (bn) de manière à former au moins une nappe (8) de brins de fils contre laquelle une pièce à scier (10) est sollicitée pour être sciée, le fil (1) étant susceptible d'être déplacé selon un mouvement alternatif et/ou continu entre une zone d'entrée (20) du fil et une zone de sortie (22) entre lesquelles le fil (1) est tendu avec une tension prédéterminée, **caractérisé par le fait qu'**il comprend des moyens de compensation (30) pour remédier à une chute de la tension (ΔT) apparaissant lors du sciage entre la première (b1) et la dernière boucle (bn), ces moyens de compensation (30) étant agencés de façon à augmenter progressivement la longueur de chaque boucle en partant de la première jusqu'à la dernière boucle.

2. Dispositif selon la revendication 1, **caractérisé par le fait que** les moyens de compensation (30) sont agencés de façon à compenser la chute de tension par une augmentation de la longueur Δ1n/N de chaque boucle successive entre la première et la dernière boucle déterminée selon l'équation :

$$\frac{\Delta l_n}{N} = \frac{4 T_o l_o}{N \cdot E \cdot \pi} \left( \frac{1}{D_n{}^2} - \frac{1}{D_o{}^2} \right)$$

où
Δ 1n est l'augmentation de la longueur totale du fil,
N est le nombre de boucles,
To est la tension à l'entrée de la première boucle,
lo est la longueur initiale du fil,
E est le module d'élasticité de Young,

Do est le diamètre à l'entrée de la première boucle,

Dn est le diamètre à la sortie de la dernière boucle.

3. Dispositif selon la revendication 1 ou 2, **caractérisé par le fait que** les moyens de compensation (30) sont constitués par une augmentation progressive du rayon des guide-fils (37) en partant de la première boucle (b1) jusqu'à la dernière boucle (bn) de façon à obtenir des guide-fils coniques (37).

4. Dispositif selon les revendications 2 et 3, **caractérisé par le fait que** ladite augmentation est déterminée selon l'équation :

$$\Delta r_n = r_n - r_0 = \frac{2T_0l_0}{E\pi^2}\left(\frac{1}{D_n^2} - \frac{1}{D_0^2}\right)$$

où

ro est le rayon des guide-fils à l'entrée de la première boucle,

rn est le rayon des guide-fils à la sortie de la dernière boucle.

5. Dispositif selon la revendication 1 ou 2, **caractérisé par le fait que** les moyens de compensation (30) sont constitués par des axes non parallèles des guide-fils (47a, 47b, 47c) qui sont cylindriques, ces axes non parallèles étant agencés de façon à obtenir une augmentation progressive de la longueur des boucles en partant de la première (b1) jusqu'à la dernière boucle (bn).

6. Dispositif selon la revendication 1 ou 2, **caractérisé par le fait que** les moyens de compensation (30) sont constitués par au moins un organe d'actionnement (70) agencé de façon à déplacer les fils des boucles différentiellement de façon à obtenir une augmentation progressive de la longueur des boucles en partant de la première (b1) jusqu'à la dernière boucle (bn).

7. Dispositif selon la revendication 6, **caractérisé par le fait que** les organes d'actionnement sont constitués par au moins un rouleau (70), un cylindre, une tige ou un peigne susceptible d'agir sur les fils des boucles de fils pour obtenir ladite augmentation de la longueur.

8. Procédé de sciage par fil selon lequel on scie une pièce à scier (10) sollicitée dans une zone de sciage (21) contre une nappe (8) de brins de fils obtenue en enroulant un fil (1) sur au moins deux guide-fils (7, 37) en boucles successives d'une première boucle (b1) jusqu'à une dernière boucle (bn), le fil (1) étant susceptible d'être déplacé selon un mouvement alternatif et/ou continu entre une zone d'entrée (20) du fil et une zone de sortie (22) entre lesquelles le fil (1) est tendu avec une tension prédéterminée, **caractérisé par le fait que** l'on compense grâce à des moyens de compensation (30) une chute de tension apparaissant lors du sciage entre la première (b1) et la dernière boucle (bn) en augmentant progressivement la longueur de chaque boucle en partant de la première (b1) jusqu'à la dernière boucle (bn).

9. Procédé selon la revendication 8, **caractérisé par le fait que** l'augmentation de la longueur de chaque boucle successive est déterminée selon l'équation :

$$\frac{\Delta l_n}{N} = \frac{4T_0l_0}{N \cdot E \cdot \pi}\left(\frac{1}{D_n^2} - \frac{1}{D_0^2}\right)$$

où

$\Delta l_n$ est l'augmentation de la longueur totale du fil,

N est le nombre de boucles,

To est la tension à l'entrée de la première boucle,

lo est la longueur initiale du fil,

E est le module d'élasticité de Young,

Do est le diamètre à l'entrée de la première boucle,
Dn est le diamètre à la sortie de la dernière boucle.

10. Procédé selon la revendication 8 ou 9, **caractérisé par le fait que** l'on augmente progressivement la longueur de chaque boucle en donnant une forme conique aux guide-fils (37) dont le diamètre le plus petit se trouve à l'entrée de la première boucle.

11. Procédé selon la revendication 9 et 10, **caractérisé par le fait que** l'on détermine la forme conique des guide-fils (37) selon l'équation :

$$\Delta r_n = r_n - r_0 = \frac{2T_0 l_0}{E\pi^2}\left(\frac{1}{D_n^2} - \frac{1}{D_0^2}\right)$$

où
ro est le rayon des guide-fils à l'entrée de la première boucle,
rn est le rayon des guide-fils à la sortie de la dernière boucle

12. Procédé selon la revendication 8 ou 9, **caractérisé par le fait que** l'on obtient une augmentation de la longueur des boucles en disposant les axes des guide-fils (47a, 47b, 47c) de façon non parallèle, divergeant vers la dernière boucle (bn).

13. Procédé selon la revendication 8 ou 9, **caractérisé par le fait que** l'on utilise au moins un organe d'actionnement (70), tel qu'un rouleau cylindre, une tige ou un peigne, pour déplacer les fils des boucles différentiellement de façon à obtenir une augmentation progressive de la longueur des boucles en partant de la première (b1) jusqu'à la dernière boucle (bn).

Fig.1

## Fig.2

## Fig.3

Fig.4

Fig.5

## Fig.6

## Fig.7

**Office européen des brevets**

## RAPPORT DE RECHERCHE EUROPEENNE

Numéro de la demande

EP 06 00 0351

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 102 32 667 A1 (WACKER SILTRONIC AG) 12 février 2004 (2004-02-12) * alinéas [0002], [0003], [0018] - [0022] * * figures 1-5 * | 1,6-8,13 | INV. B28D5/04 B23D57/00 |
| A | | 2,3,5,9, 10,12 | |
| | ----- | | |
| X | PATENT ABSTRACTS OF JAPAN vol. 1996, no. 02, 29 février 1996 (1996-02-29) -& JP 07 276218 A (HITACHI CABLE LTD), 24 octobre 1995 (1995-10-24) * abrégé * * figures 1-4 * | 1,6-8,13 | |
| A | | 2,3,5,9, 10,12 | |
| | ----- | | |
| X | PATENT ABSTRACTS OF JAPAN vol. 016, no. 405 (M-1301), 26 août 1992 (1992-08-26) -& JP 04 135158 A (NIPPEI TOYAMA CORP), 8 mai 1992 (1992-05-08) * abrégé * * figure 3 * | 1,3,8,10 | DOMAINES TECHNIQUES RECHERCHES (IPC) B28D B23D |
| A | FR 2 652 533 A (PHOTEC INDUSTRIE) 5 avril 1991 (1991-04-05) * page 8, ligne 28 - page 9, ligne 10 * * figure 1 * | 1,2,8,9 | |
| | ----- | | |
| A | US 3 599 623 A (WILLIAM S. PHY) 17 août 1971 (1971-08-17) * colonne 2, ligne 68 - colonne 3, ligne 10 * * figures 1,2,4 * | 1,5,8,12 | |
| | ----- | | |

Le présent rapport a été établi pour toutes les revendications

| Lieu de la recherche | Date d'achèvement de la recherche | Examinateur |
|---|---|---|
| La Haye | 8 mai 2006 | Chariot, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

**ANNEXE AU RAPPORT DE RECHERCHE EUROPEENNE
RELATIF A LA DEMANDE DE BREVET EUROPEEN NO.**

EP 06 00 0351

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-05-2006

| Document brevet cité au rapport de recherche | Date de publication | Membre(s) de la famille de brevet(s) | Date de publication |
|---|---|---|---|
| DE 10232667 A1 | 12-02-2004 | AUCUN | |
| JP 07276218 A | 24-10-1995 | AUCUN | |
| JP 04135158 A | 08-05-1992 | JP 3074007 B2 | 07-08-2000 |
| FR 2652533 A | 05-04-1991 | WO 9104839 A1 | 18-04-1991 |
| US 3599623 A | 17-08-1971 | AUCUN | |

Pour tout renseignement concernant cette annexe : voir Journal Officiel de l'Office européen des brevets, No.12/82